Europäisches Patentamt

European Patent Office

Office européen des brevets

(19)

(11) Veröffentlichungsnummer: **0 175 781**
**B1**

(12) ## EUROPÄISCHE PATENTSCHRIFT

(45) Veröffentlichungstag der Patentschrift:
27.04.88

(51) Int. Cl.⁴: **B 62 D 7/14**

(21) Anmeldenummer: **85902010.9**

(22) Anmeldetag: **02.04.85**

(86) Internationale Anmeldenummer:
**PCT/EP 85/00146**

(87) Internationale Veröffentlichungsnummer:
**WO 85/04631 (24.10.85 Gazette 85/23)**

(54) **LENKEINRICHTUNG FÜR EIN KRAFTFAHRZEUG.**

(30) Priorität: **06.04.84 DE 3413007**

(43) Veröffentlichungstag der Anmeldung:
**02.04.86 Patentblatt 86/14**

(45) Bekanntmachung des Hinweises auf die Patenterteilung:
**27.04.88 Patentblatt 88/17**

(84) Benannte Vertragsstaaten:
**DE FR GB SE**

(56) Entgegenhaltungen:
**DE-A-3 124 821**
**DE-A-3 300 640**
**FR-A-2 351 841**
**FR-A-2 534 866**
**GB-A-2 083 422**
**GB-A-2 114 519**

(73) Patentinhaber: **AUDI AG, Postfach 220, D-8070 Ingolstadt (DE)**

(72) Erfinder: **NAUMANN, Fritz, Jahnstrasse 29, D-8071 Stammham (DE)**

(74) Vertreter: **Engelhardt, Harald, Audi AG Postfach 2 20, D-8070 Ingolstadt (DE)**

EP 0 175 781 B1

## Beschreibung

Die Erfindung betrifft eine Lenkeinrichtung für ein Kraftfahrzeug mit lenkbaren Vorderrädern und lenkbaren Hinterrädern gemäß dem Oberbegriff des Patentanspruches 1.

Eine derartige Lenkeinrichtung ist der DE-A-3 124 821 entnehmbar. Die Hinterräder des Kraftfahrzeuges werden bei Kurvenfahrt so gelenkt, daß unter Berücksichtigung der Fahrgeschwindigkeit, der von den Vorder- und Hinterrädern getragenen gefederten Massen bzw. der daraus resultierenden Seitenkräfte und des Vorderrad-Einschlagwinkels ein Kurvenverhalten erzielt wird, nach dem das Kraftfahrzeug stets tangential zu dessen Wendekreis die Kurven durchfährt. Dabei soll die von dem Fahrer gefühlsmäßig erfaßte Querbeschleunigung genau mit der bei der Kurvenfahrt um den Kurvenmittelpunkt auf das Fahrzeug wirkenden Zentrifugalbeschleunigungskraft übereinstimmen. Die Masse des Kraftfahrzeuges wird durch entsprechende Sensoren an den Federbeinen dessen Radaufhängungen erfaßt und einer Auswerteeinheit zugeführt, in der ein mit dem Lenkeinschlagswinkel für die Vorderräder verknüpfter Korrekturwinkel ermittelt und gesteuert wird.

Beim Gegenstand der DE-A-3 133 985 werden als fahrzeugspezifische Parameter unter anderem der Lenkwinkel der Vorderräder und die Geschwindigkeit des Kraftfahrzeuges erfaßt und daraus ein Lenkeinschlag für die Hinterräder abgeleitet. Zusätzlich kann auch noch die Seitenbeschleunigung bzw. der Gierwinkel des Kraftfahrzeuges in die Berechnung eingehen.

Beabsichtigt mit diesen Maßnahmen ist eine höhere Kurvenstabilität, ein schnelleres Ansprechen der Lenkung des Kraftfahrzeuges auf Kurvenmanöver und schließlich eine größere Wendigkeit im Parkierbereich. Die Lenkung der Hinterräder kann sowohl mit positivem als auch mit negativem Vorzeichen erfolgen; d. h., die Hinterräder können entweder gleichsinnig mit den Vorderrädern oder entgegengesetzt zu diesen eingeschlagen werden.

Die Steuerung von relativ schnell fahrenden Kraftfahrzeugen (Pkw) an den Vorder- und an den Hinterrädern ist allerdings hinsichtlich der Fahrstabilität äußerst problematisch, so daß die die Hinterräder steuernden und lenkenden Einrichtungen, insbesondere an die erforderlichen Sensoren, hohe Anforderungen zu stellen sind. Dementsprechend sind derartige Einrichtungen in der Praxis äußerst aufwendig realisierbar. Hinzu kommt, daß den momentanen Fahrbahnverhältnissen nicht ausreichend Rechnung getragen wird, so daß bei geringen Haftbeiwerten zwischen Reifen und Fahrbahn durch die Hinterradlenkung eingeleitete Instabilitäten möglich sind.

Aufgabe der Erfindung ist es deshalb, eine den Fahrbahnverhältnissen vermehrt Rechnung tragende und einfachere Einrichtung der gattungsgemäßen Art zu schaffen.

Diese Aufgabe wird erfindungsgemäß mit den kennzeichnenden Merkmalen des Patentanspruches 1 gelöst. Es hat sich herausgestellt, daß das von der Bedienungsperson des Kraftfahrzeuges auf die Lenkung der Vorderräder aufgebrachte Lenkmoment eine relevante Größe zur Steuerung der Hinterräder darstellt. Dabei ist zu berücksichtigen, daß in dieses Lenkmoment zahlreiche fahrspezifische Parameter wie Geschwindigkeit des Kraftfahrzeuges, Fahrbahn-Haftbeiwert, Kurvenradius, Reifenzustand etc. eingehen.

So versteht es sich z. B., daß bei einer schneeglatten Fahrbahn aufgrund des geringen Haftbeiwertes nur ein geringes Lenkmoment aufbaubar ist; hinzu kommt, daß durch ggf. entsprechend vorsichtiges Agieren der Bedienungsperson in Kenntnis dieses geringen Haftbeiwertes ebenfalls das Lenkmoment niedrig gehalten ist. Letzteres trifft auch dann zu, wenn das Kraftfahrzeug mit einer hohen Geschwindigkeit bewegt wird. Erfindungsgemäß kann hier ein geringer Lenkeinschlag oder gar kein Lenkeinschlag der Hinterräder gesteuert werden.

Andererseits steigt das Lenkmoment in jedem Falle zumindest kurzzeitig dann an, wenn beispielsweise durch ein plötzlich auftauchendes Hindernis eine relativ heftige Lenkreaktion an den Vorderrädern ausgelöst wird, so daß durch entsprechendes Mitlenken der Hinterräder ein verstärkter Ausweichimpuls erzeugt werden kann. Fällt das Lenkmoment wieder ab, so wird der Einschlag der Hinterräder wieder mehr oder minder gegebenenfalls abhängig vom Lenkwinkel der Vorderräder zurückgestellt.

Wird beim Parkieren des Kraftfahrzeuges ein hohes Lenkmoment erzeugt, so resultiert daraus ein relativ starker Einschlag der Hinterräder. Das hohe Lenkmoment kann selbst bei geringen Haftbeiwerten dann erzeugt werden, wenn die Lenkung für die Vorderräder in ihre Endanschlagstellung verdreht ist und deshalb einen inneren Widerstand bildet.

Das Lenkmoment kann durch Messen der Übertragungskräfte zwischen Lenkrad und Lenkgetriebe, beispielsweise innerhalb der Lenksäule, ermittelt werden. Derartige Vorrichtungen sind beispielsweise bei der Verwendung von Servolenkungen üblich.

Durch die Merkmale des Patentanspruches 2 ist bei nur sehr geringen Lenkmomenten die Lenkung der Hinterräder eliminiert. Dadurch ist ein unproblematisches Spurverhalten des Kraftfahrzeuges insbesondere bei hohen Geschwindigkeiten und gegebenenfalls in langgezogenen Kurven oder bei geringfügigen wechselseitigen Lenkmanövern sichergestellt. Dem Vorschlag liegt die Erkenntnis zugrunde, daß bei solchen und ähnlichen Fahrzuständen unter Berücksichtigung der bei Lenksystemen unvermeidlichen Elastizitäten ungelenkte Hinterräder hinsichtlich ihrer Führungseigenschaften vorteilhafter sind und somit das Kraftfahrzeug durch die Bedienungsperson leichter beherrschbar ist. Besonders vorteilhaft werden in Verbindung dazu die Merkmale des Patentanspruches 6 vorgeschlagen, so daß das die Hinterräder betätigende Lenksystem mechanisch blockiert ist.

Bei einem Kraftfahrzeug mit einer Servolenkung an der Vorderachse kann in besonders einfacher und zweckmäßiger Weise gemäß Patentanspruch 3 verfahren werden. Ein in das Hydrauliksystem der Servolenkung eingeschalteter, durckabhängiger Schalter kann somit ein druckproportionales Signal erzeugen, welches in einer entsprechenden Steuerelektronik verarbeitet wird.

Zur Erhöhung der Funktionssicherheit der Lenkeinrichtung kann ferner gemäß Patentanspruch 4 auch der Lenkwinkel der Vorderräder als Schwellwertabschaltung mit einbezogen sein. Da der Lenkwinkel der Vorderräder zur Steuerung des Lenkwinkels der Hinterräder ohnehin erforderlich ist, stellt diese Maßnahme keinen zusätzlichen Aufwand dar. Durch eine logische Verknüpfungsschaltung wird sichergestellt, daß nur beim Vorliegen beider Signale eine Lenkung der Hinterräder eingeleitet wird.

Weitere zweckmäßige und vorteilhafte Merkmale und Ausgestaltungen der Erfindung sind den Patentansprüchen 5 bis 10 entnehmbar.

Ein totales Abschalten der Lenkung der Hinterräder kann beispielsweise dann angezeigt sein, wenn beim Parkieren des Kraftfahrzeuges kein Raum zum Ausscheren des Hecks des Kraftfahrzeuges zur Verfügung steht oder wenn mit dem Kraftfahrzeug Personen befördert werden, die hinsichtlich ihres Wohlbefindens empfindlich auf rasante Gierbewegungen des Kraftfahrzeuges ragieren.

Die Patentansprüche 7 und 8 beschreiben eine besonders einfach ausführbare und funktionssichere Verriegelung des Lenksystems der Hinterräder.

Durch die Merkmale der Patentansprüche 9 und 10 wird die Ansprechgeschwindigkeit der Lenkeinrichtung z. B. bei plötzlichen Ausweichmanövern erhöht und andererseits eine schnelle Stabilisierung des Fahrzeuges nach einem Kurvenmanöver sichergestellt.

Ein Ausführungsbeispiel der Erfindung ist im folgenden mit weiteren Einzelheiten näher erläutert. Die schematische Zeichnung zeigt ein Kraftfahrzeug mit einer Lenkeinrichtung mit lenkbaren Vorder- und Hinterrädern.

Ein Kraftfahrzeug 2 ist sowohl mit lenkbaren Vorderrädern 4 als auch mit lenkbaren Hinterrädern 6 versehen. Die Vorderräder 4 werden über eine hydraulische Servolenkung 8 betätigt, welche über eine Lenksäule 10 mit einem Lenkrad 12 verbunden ist. Als Übertragungsmittel zwischen der Servolenkung 8 und den Vorderrädern 4 dienen Spurstangen 14 und Achsschenkel 16.

Die nicht näher dargestellte Servolenkung 8 wird über eine von der Brennkraftmaschine 18 des Kraftfahrzeuges angetriebene Pumpe 20 mit Hydraulikmedium versorgt. Das Hydraulikmedium wird über eine Leitung 22 einem Lenkventil 24 mit offener Mitte zugeführt.

Ferner sind die über Achsschenkel 26 lenkbaren Hinterräder über Spurstangen 28 mit einer Zahnstangenlenkung 30 verbunden. Das mit der Zahnstange 32 in Eingriff befindliche Zahnritzel 34 der Zahnstangenlenkung 30 wird mittels eines elektrischen Stellmotores 36 betätigt. Der Stellmotor 36 ist in beide Drehrichtungen umsteuerbar. Die Ansteuerung des Stellmotores 36 erfolgt über eine Steuerelektronik 38, die an das nicht dargestellte, elektrische Bordnetz des Kraftfahrzeuges angeschlossen ist.

An die Servolenkung 8 sowie an die Zahnstangenlenkung 30 sind je ein Lenkwinkelsensor 40, 42 angeschlossen, die einen ausgehend von der Mittelstellung der Lenkungen positiven oder negativen Lenkwinkel $\alpha$ bzw. $\beta$ der Vorder- und Hinterräder 4, 6 in Form eines elektrischen, analogen Spannungssignals an die Steuerelektronik 38 abgeben.

Ferner ist in der Zahnstange 32 der Zahnstangenlenkung 30 eine Kerbe 44 vorgesehen, welche in der Mittelstellung der Zannstangenlenkung mit einem verschiebbar im Gehäuse 46 gelagerten Verriegelungsstift 48 korrespondiert. Der Verriegelungsstift 48 wird mittels einer Feder 50 gegen die Zahnstange 32 gespannt, so daß dieser die Zahnstange 32 blockierend in die Kerbe 44 einrastet. Es versteht sich, daß die leicht konische Ausbildung des mit der Kerbe 44 zusammenwirkenden Abschnittes des Verriegelungsstiftes 48 innerhalb des Selbsthemmungsbereiches liegt.

Der Verriegelungsstift 48 endet in ein Kolbenteil 52, welches in dem Gehäuse 46 geführt ist und eine Kammer 54 abteilt, die über eine Leitung 56 mit der Leitung 22 zur Servolenkung 8 verbunden ist.

Ferner ist in die Leitung 22 ein Drucksensor 58 eingeschaltet, welcher ein druckproportionales Signal an die Steuerelektronik 38 abgibt.

Bei einem Verdrehen des Lenkhandrades 12 tritt zur Überwindung der momentan aufzubringenden Lenkkräfte, welche vom Fahrbahn-Haftbeiwert, von der Fahrzeuggeschwindigkeit, vom Lenkwinkel der Vorderräder 4 und von der Lenkgeschwindigkeit abhängen, ein Lenkmoment auf, welches einem entsprechend der Kennung der hydraulischen Lenkung proportionalen oder analogen Druck P in der Leitung 22 zwischen der Pumpe 20 und dem Lenkventil 24 erzeugt. Dabei steuert das Lenkventil 24 in bei Servolenkungen mit offener Mitte üblicher Weise den nicht dargestellten Rücklauf des Hydraulikmediums zu einem drucklosen Vorratsbehälter zu und verbindet gleichzeitig die Leitung 22 mit einer der hydraulischen Arbeitskammern der Servolenkung.

Der dem Lenkmoment entsprechende Druck des Arbeitsmittels in der Leitung 22 wird in dem Sensor 58 in ein entsprechendes Signal umgewandelt der Steuerelektronik 38 zugeführt.

Zugleich wird über den Lenkwinkelsensor 40 der momentan eingestellte Lenkwinkel und gegebenenfalls die Lenkwinkelgeschwindigkeit als positiver oder negativer Wert erfaßt und ebenfalls an die Steuerelektronik gemeldet.

Bei Überschreitung einer vorbestimmten Druckschwelle von z. B. 30 bar in der Leitung 22 und gleichzeitigem Überschreiten eines vorbestimmten Lenkwinkels α aus der Mittelstellung der Servolenkung 8 heraus von z. B. 15 % des maximalen Lenkeinschlages steuert die Steuerelektronik 38 den Stellmotor 36 im Sinne eines ebenfalls positiven oder negativen Lenkeinschlages der Hinterräder 6 an. Dieser Lenkeinschlag erfolgt bei höherem Lenkmoment an der Servolenkung 8 mit einer höheren Geschwindigkeit als bei niedrigerem Lenkmoment.

Die Feder 50 ist derart abgestimmt, daß sie den Verriegelungsstift 48 bis zu der vorbestimmten Druckschwelle von 30 bar in der Kerbe 44 der Zahnstange 32 hält. Oberhalb dieser Druckschwelle wird der Verriegelungsstift 48 durch die überwiegende hydraulische Kraft in der Kammer 54 durch den Kolben 52 zurückgezogen.

In der Leitung 56 zwischen der Leitung 22 und der Kammer 54 am Verriegelungsstift 48 ist ein elektromagnetisches Absperrventil 60 eingeschaltet, mittels welchem die Leitung 56 unterbrochen werden kann. Das Absperrventil 60 ist dann geschlossen, wenn über einen manuell betätigbaren, elektrischen Unterbrecherschalter 62 die Steuerelektronik 38 vom Bordnetz des Kraftfahrzeuges getrennt bzw. abgeschaltet ist.

Das Lenkmoment an den Vorderrädern 4 bewirkt somit eine entsprechende Steuerung der Hinterräder 6, wobei diese Steuerung zumindest teilweise einer Selbstregelung unterliegt. Sobald durch den Einschlag der Hinterräder 6 ein Teil des Richtungswechselimpulses uber die Hinterräder 6 übertragen wird, nimmt automätisch das Lenkmoment vorne ab, wodurch je nach Größe der Abnahme bereits eine Rückstellung der Hinterräder 6 bewirkt wird. Bei Unterschreiten der vorgegebenen Druckschwelle P in der Leitung 22 werden die Hinterräder 6 bis in deren Mittelstellung (kein Lenkeinschlag) zurückgestellt und zugleich die Zahnstangenlenkung 30 durch Einrasten des Verriegelungsstiftes 48 in die Kerbe 44 der Zahnstange 32 verriegelt. Die Rückstellung der Zahnstangenlenkung 30 erfolgt dabei mit einer vorbestimmten, höheren Geschwindigkeit.

Die Steuerelektronik 38 kann mit einem Rechner versehen sein, in dem sowohl die oberhalb der vorbestimmten Druckschwelle liegenden Lenkmomente P und die oberhalb des vorbestimmten Lenkwinkels der Vorderräder 4 liegenden Lenkwinkel α sowie deren zweite Ableitung abgespeichert sind. Ferner kann ggf. die Geschwindigkeit V des Kraftfahrzeuges eingegeben sein. Nach Maßgabe eines vorzugsweise empirisch ermittelten Kennfeldes werden dann über den elektrischen Stellmotor 36 die ausgelesenen Lenkwinkel β der Hinterräder 6 eingestellt, wobei über den Lenkwinkelsensor 42 eine geschlossene Regelschleife gebildet ist.

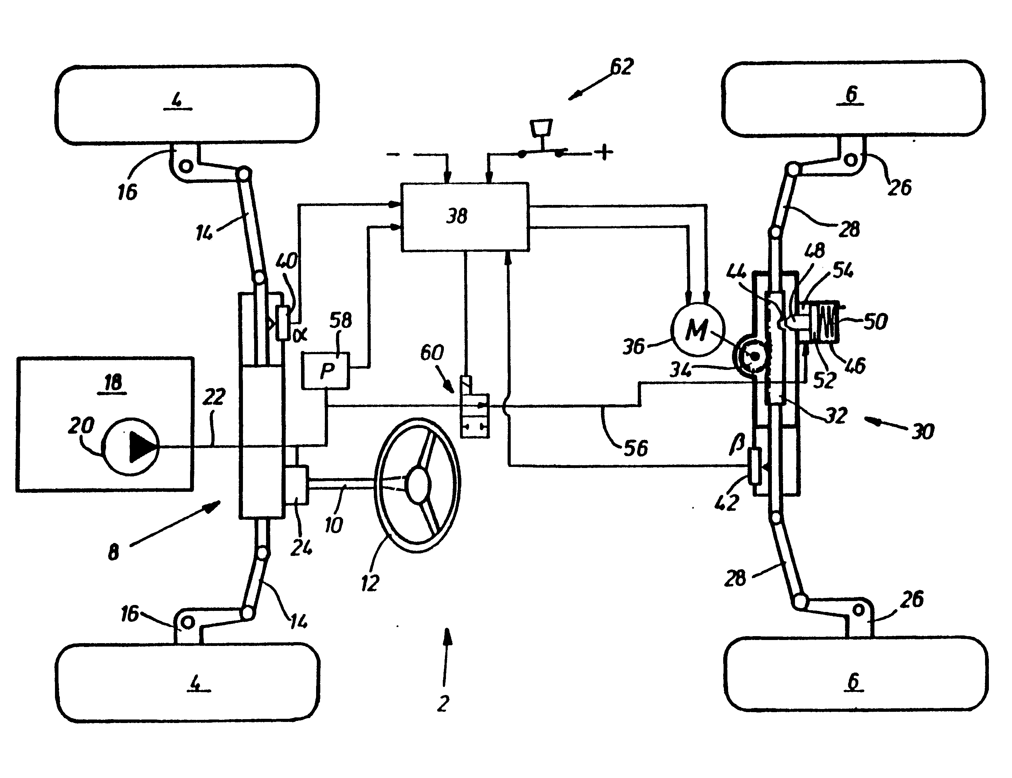

**Patentansprüche**

1. Lenkeinrichtung für ein Kraftfahrzeug mit lenkbaren Vorderrädern (4) und lenkbaren Hinterrädern (6), wobei die Lenkung der Hinterräder abhängig vom Lenkwinkel der Vorderräder und zumindest von an den Vorderrädern wirksamen Lenkkräften erfolgt, dadurch gekennzeichnet, daß zur Erfassung der Lenkkräfte das aufgebrachte Lenkmoment an den Vorderrädern dient.

2. Lenkeinrichtung nach Anspruch 1, dadurch gekennzeichnet, daß unterhalb eines vorgegebenen Lenkmomentes keine Lenkung der Hinterräder (6) erfolgt.

3. Lenkeinrichtung nach den Ansprüchen 1 und 2, dadurch gekennzeichnet, daß die Vorderräder (4) mittels einer hydraulischen Servolenkung (8) gelenkt sind und das der Arbeitsmitteldruck der Servolenkung (8) als Parameter für das Lenkmoment verwendet ist.

4. Lenkeinrichtung nach den Ansprüchen 1 bis 3, dadurch gekennzeichnet, daß eine Lenkung der Hinterräder (6) erst nach Überschreiten eines vorbestimmten Lenkwinkels der Vorderräder (6) erfolgt.

5. Lenkeinrichtung nach den Ansprüchen 1 bis 4, dadurch gekennzeichnet, daß die Lankvorrichtung der Hinterräder (6) unterhalb eines vorbestimmten Lenkwinkels α und/oder unterhalb eines vorbestimmten Lenkmomentes an den Vorderrädern (4) verriegelt ist.

6. Lenkeinrichtung nach den Ansprüchen 1 bis 5, dadurch gekennzeichnet, daß die Lenkvorrichtung der Hinterräder (6) abschaltbar (Unterbrecherschalter 62) ist.

7. Lenkeinrichtung nach Anspruch 5, dadurch gekennzeichnet, daß die hintere Lenkvorrichtung eine Zahnstangenlenkung (30) ist und das in der Zahnstange (32) eina Kerbe (44) vorgesehen ist, die in Mittelstellung mit einem Verriegelungsstift (48) korrespondiert.

8. Lenkeinrichtung nach den Ansprüchen 3, 5 und 7, dadurch gekennzeichnet, daß der Verriegelungsstift (48) hydraulisch abhängig vom Arbeitsmitteldruck der Servolenkung (8) für die Vorderräder (4) betätigt ist.

9. Lenkeinrichtung nach den vorhergehenden Ansprüchen, dadurch gekennzeichnet, daß die Auslenkgeschwindigkeit der Hinterräder (6) abhängig vom Lenkmoment der Vorderräder (4) geregelt ist.

10. Lenkeinrichtung nach Anspruch 9, dadurch gekennzeichnet, daß das Rücklenken der Hinterräder (6) in die Mittellage mit einer vorbestimmten höheren Geschwindigkeit erfolgt.

## Claims

1. Steering apparatus for a motor vehicle with steerable front wheels (4) and steerable rear wheels (6), wherein the steering of the rear wheels occurs as a function of the steering angle of the front wheels and at least of steering forces effective at the front wheels, characterized in that the steering torque exerted on the front wheels serves to detect the steering forces.

2. Steering apparatus according to Claim 1, characterized in that no steering of the rear wheels (6) occurs below a prescribed steering torque.

3. Steering apparatus according to Claims 1 and 2, characterized in that the front wheels (4) are steered by means of a hydraulic servo steering mechanism (8) and that the work fluid pressure of the servo steering mechanism (8) is used as a parameter for the steering torque.

4. Steering apparatus according to Claims 1 to 3, characterized in that the steering of the rear wheels (6) occurs only after a predetermined steering angle of the front wheels (6) is exceeded.

5. Steering apparatus according to Claims 1 to 4, characterized in that the steering mechanism of the rear wheels (6) is locked below a predetermined steering angle α and/or below a predetermined steering torque at the front wheels (4).

6. Steering apparatus according to Claims 1 to 5, characterized in that the steering mechanism of the rear wheels (6) can be cut out (interrupter switch 62).

7. Steering apparatus according to Claim 5, characterized in that the rear steering mechanism is a rack and pinion steering mechanism (30) and that the rack (32) is provided with a notch (44) which corresponds to a locking pin (48) in the central position.

8. Steering apparatus according to Claims 3, 5 and 7, characterized in that the locking pin (48) is actuated hydraulically dependently upon the work fluid pressure of the servo steering mechanism (8) for the front wheels (4).

9. Steering apparatus according to the previous Claims, characterized in that the steering deviation speed of the rear wheels (6) is regulated as a function of the steering torque of the front wheels (4).

10. Steering apparatus according to Claim 9, characterized in that the return steering of the rear wheels (6) into the central position occurs at a predetermined higher speed.

## Revendications

1. Mécanisme de direction pour un véhicule automobile à roues avant orientables (4) et à roues arrière orientables (6), la commande des roues arrière s'effectuant sous la dépendance de l'angle de braquage des roues avant et, au moins, de forces de direction actives sur les roues avant, caractérisé en ce que le moment du couple de direction appliqué sur les roues avant sert pour la détection des forces de direction.

2. Mécanisme de direction selon la revendication 1, caractérisé en ce qu'il ne s'effectue pas de commande des roues arrière (5) au dessous d'un moment prédéterminé du couple de direction.

3. Mécanisme de direction selon la revendication 1 ou 2, caractérisé en ce que les roues avant (4) sont orientées au moyen d'une direction asservie hydrauliquement (8), et en ce que la pression du fluide hydraulique de la direction assistée (8) est utilisée comme paramètre pour le moment du couple de diréction.

4. Mécanisme de direction selon l'une quelconque des revendications 1 à 3, caractérisé en ce qu'un braquage des roues arrière (6) ne s'effectue qu'après le dépassement d'un angle de braquage prédéterminé des roues avant (4).

5. Mécanisme de direction selon l'une quelconque des revendications 1 à 4, caractérisé en ce que le dispositif de direction des roues arrière (6) est verrouillé au-dessous d'un angle de braquage α prédéterminé et/ou au dessous d'un moment prédéterminé du couple de direction sur les roues avant (4).

6. Mécanisme de direction selon l'une quelconque des revendications 1 à 5, caractérisé en ce que le dispositif de direction des roues arrière (6) peut être mis hors service (interrupteur 62).

7. Mécanisme de direction selon la revendication 5, caractérisé en ce que le dispositif de direction arrière est une direction à crémaillère (30), et en ce qu'il est formé, dans la crémaillère (32), une encoche (44) qui correspond, en position médiane, à une broche de verrouillage (48).

8. Mécanisme de direction selon l'une quelconque des revendications 3, 5 et 7, caractérisé en ce que la broche de verrouillage (46) est actionnée hydrauliquement sous la dépendance de la pression du fluide hydraulique de la direction asservie (8) pour les roues avant (4).

9. Mécanisme de direction selon l'une quelconque des revendications 1 à 8, caractérisé en ce que la vitesse de braquage des roues arrière (6) est réglée en fonction du moment du couple de direction des roues avant (4).

10. Mécanisme de direction selon la revendication 9, caractérisé en ce que le retour des roues arrière (6) dans la position médiane s'effectue à une vitesse prédéterminée qui est plus élevée.